# EUROPÄISCHE PATENTANMELDUNG

(11) **EP 3 965 264 A1**
(43) Veröffentlichungstag der Anmeldung: **09.03.2022**
(21) Anmeldenummer: 21194415.2
(22) Anmeldetag: 01.09.2021
(51) Int. Cl.: H02K 1/12, H02K 15/02

(54) **STATORBLECHPAKET, ELEKTRISCHE MASCHINE UND FAHRZEUG**

(30) Priorität: 03.09.2020 DE 102020211144
(71) Anmelder: Valeo Siemens eAutomotive Germany GmbH, 91056 Erlangen (DE)
(72) Erfinder: Böhm, Andreas, 91056 Erlangen (DE); Müller, Michael, 97616 Bad Neustadt a.d.Saale (DE)

(57) **Zusammenfassung**

Es wird ein Statorblechpaket (7, 7a, 7b) für einen Stator (5) einer elektrischen Maschine (1) angegeben, das mehrere aneinandergereihte Statorbleche (6) mit nach innen hin offenen Statornuten (13) für die Aufnahme einer Statorwicklung (8) umfasst, wobei die Statorbleche (6) mit einer Mehrzahl n außenliegender, über den Umfang des Statorblechpakets (7, 7a, 7b) gleich verteilter, Schweißnähte (14) oder Schweißnaht-Abschnitte miteinander verschweißt sind. Die Schweißnähte (14) oder Schweißnaht-Abschnitte verlaufen jeweils von einer ersten Stirnfläche (B) des Statorblechpakets (7) zu einer zweiten Stirnfläche (C) des Statorblechpakets (7) und erstrecken sich, bezogen auf die Drehachse (A) der elektrischen Maschine (1), jeweils über einen Winkel (α). Der Winkel (α) liegt dabei in einem Bereich von α ≥ 360°/n - 10%. Weiterhin wird eine elektrische Maschine (1) mit einem solchen Statorblechpaket (7, 7a, 7b) beziehungsweise Stator (5) angegeben, sowie ein Fahrzeug (15) mit einer solchen elektrischen Maschine (1).

## Beschreibung

### TECHNISCHES GEBIET

Die Erfindung betrifft ein Statorblechpaket für einen Stator einer elektrischen Maschine, welches mehrere aneinandergereihte Statorbleche mit nach innen hin offenen Statornuten für die Aufnahme einer Statorwicklung umfasst. Weiterhin wird eine elektrische Maschine mit einem solchen Statorblechpaket beziehungsweise mit einem solchen Stator angegeben, sowie ein Fahrzeug mit einer solchen elektrischen Maschine.

### STAND DER TECHNIK

Bei elektrischen Maschinen ist es bekannt, die aneinandergereihten Statorbleche eines Statorblechpakets miteinander zu verschweißen, um dem Statorblechpaket Stabilität zu verleihen. Häufig verlaufen die Schweißnähte dabei parallel zu den Statornuten des Statorblechpakets. Die Verschweißung führt grundsätzlich zu einem Verzug des Statorblechpakets. Konkret ergeben sich unter anderem Abweichungen der zentralen Bohrung des Statorblechpakets von der Zylinderform, und zwar dergestalt, dass sich bei starker Vergrößerung der Abweichung von der Zylinderform im Querschnitt ein blumenartiges Muster ergibt. Verlaufen die Schweißnähte schräg beziehungsweise schraubenlinienförmig, so ergibt sich je nach Wahl der Schnittebene eine Verdrehung dieses blumenartigen Musters. Da die Abweichung von der Zylinderform unmittelbar die Breite des Luftspalts zwischen Stator und Rotor und damit die magnetischen Kräfte im Betrieb der elektrischen Maschine beeinflusst, ergeben sich durch den Schweißverzug unerwünschte Drehmomentschwankungen beziehungsweise ein unerwünschtes Rastmoment.

### OFFENBARUNG DER ERFINDUNG

Eine Aufgabe der Erfindung ist es daher, ein verbessertes Statorblechpaket, eine verbesserte elektrische Maschine sowie ein verbessertes Fahrzeug mit einer solchen elektrischen Maschine anzugeben. Insbesondere sollen unerwünschte Drehmomentschwankungen beziehungsweise ein unerwünschtes Rastmoment vermieden oder wenigstens verringert werden.

Die Aufgabe der Erfindung wird gelöst durch Statorblechpaket für einen Stator einer elektrischen Maschine, umfassend mehrere aneinandergereihte Statorbleche mit nach innen hin offenen Statornuten für die Aufnahme einer Statorwicklung, wobei die Statorbleche mit einer Mehrzahl n außenliegender, über den Umfang des Statorblechpakets gleich verteilter, Schweißnähte oder Schweißnaht-Abschnitte miteinander verschweißt sind, die jeweils von einer ersten Stirnfläche des Statorblechpakets zu einer zweiten Stirnfläche des Statorblechpakets verlaufen und sich, bezogen auf die Drehachse der elektrischen Maschine, jeweils über einen Winkel erstrecken, der in einem Bereich von α ≥ 360°/n - 10% liegt.

Die Schweißnähte oder Schweißnaht-Abschnitte verlaufen somit jeweils von einer ersten Stirnfläche des Statorblechpakets zu einer zweiten Stirnfläche des Statorblechpakets und erstrecken sich, bezogen auf die Drehachse der elektrischen Maschine, jeweils über einen Winkel α, der in einem Bereich von α ≥ 360°/n - 10% liegt. Das heißt, die Schweißnähte oder Schweißnaht-Abschnitte verlaufen in nicht-axialer Richtung und n gibt die Anzahl der Schweißnähte oder Schweißnaht-Abschnitte an.

Die Aufgabe der Erfindung wird auch mit einer elektrischen Maschine gelöst, welche einen Stator mit einem Statorblechpaket der oben genannten Art umfasst, wobei in den Statornuten des Statorblechpakets eine Statorwicklung aufgenommen ist. Die elektrische Maschine umfasst darüber hinaus einen Rotor, der gegenüber dem Stator um die Rotationsachse des Rotors drehbar gelagert ist.

Schließlich wird die Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine erfolgt.

Mit Hilfe der vorgeschlagenen Maßnahmen können die eingangs genannten Nachteile überwunden werden. Zwar kann ein Schweißverzug des Statorblechpakets als solcher nicht verhindert werden, jedoch ergibt sich in den verschiedenen Schnittebenen durch das Statorblechpaket eine starke Verdrehung des eingangs erläuterten blumenartigen Musters, welches eine Abweichung der zentralen Bohrung des Statorblechpakets von der Zylinderform repräsentiert. Das an der ersten Stirnfläche vorliegende Muster sollte dabei in etwa deckungsgleich mit dem Muster an der zweiten Stirnfläche sein. Eine allfällige Verdrehung zwischen den Mustern sollte gering sein. Über die gesamte Länge des Statorblechpakets gesehen kommt es dadurch zu einem Ausgleich der Einflüsse auf die magnetischen Kräfte im Betrieb der elektrischen Maschine. Mit anderen Worten wird der Einfluss des Schweißverzugs auf die genannten magnetischen Kräfte über die gesamte Länge des Statorblechpakets "verschmiert". Unerwünschte Drehmomentschwankungen beziehungsweise ein unerwünschtes Rastmoment können auf diese Weise vermieden oder wenigstens deutlich reduziert werden.

Insbesondere können die Schweißnähte oder Schweißnaht-Abschnitte
i) (radial) aneinander angrenzen, wobei für den Winkel α = 360°/n gilt, oder
ii) einander (radial) überlappen, wobei für den Winkel α > 360°/n gilt, oder
iii) (radial) gering voneinander beabstandet sind, wobei für den Winkel 360°/n > α > 360°/n - 10% gilt.

Vorteilhaft wird die Verschweißung mit einem Laser hergestellt, da dieses Verfahren nicht auftragend ist und daher keine Nuten für die Schweißnähte hergestellt werden müssen.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn die Anzahl der Schweißnähte oder Schweißnaht-Abschnitte ungleich und insbesondere geringer ist als eine Anzahl der Statornuten. Auf diese Weise kann eine unerwünschte Verstärkung der Abweichung der zentralen Bohrung des Statorblechpakets von der Zylinderform, welche durch eine Korrelation der Schweißnähte mit den Statornuten herrührt, vermieden werden.

Günstig ist es weiterhin, wenn der Winkel α ungleich und insbesondere größer ist als ein Winkel β, über welche sich eine von der ersten Stirnfläche des Statorblechpakets zu der zweiten Stirnfläche des Statorblechpakets schraubenlinienförmig verlaufende Statornut erstreckt (beziehungsweise verläuft die Statornut in einer Abwicklung eines Umfangs des Statorblechpakets entlang einer schräg zur Drehachse der elektrischen Maschine ausgerichteten Geraden). Auf diese Weise kann eine unerwünschte Verstärkung der Abweichung der zentralen Bohrung des Statorblechpakets von der Zylinderform, welche durch eine Korrelation der Schweißnähte mit den Statornuten herrührt, ebenfalls vermieden werden.

Günstig ist es weiterhin, wenn die Schweißnähte oder Schweißnaht-Abschnitte in einer Abwicklung einer Umfangs des Statorblechpakets jeweils entlang einer schräg zur Drehachse der elektrischen Maschine ausgerichteten Gerade verlaufen oder pfeilförmig oder zickzack verlaufen, da diese Formen vergleichsweise leicht herstellbar sind. Räumlich gesehen resultieren Schweißnähte oder Schweißnaht-Abschnitte, die schraubenlinienförmig verlaufen oder schraubenlinienförmige Abschnitte aufweisen. Gerade Schweißnähte verlaufen aber nicht notwendigerweise parallel zueinander.

Günstig ist es zudem, wenn die Statornuten jeweils schraubenlinienförmig verlaufen (beziehungsweise in einer Abwicklung eines Umfangs des Statorblechpakets entlang einer schräg zur Drehachse der elektrischen Maschine ausgerichteten Gerade) und
a) ein Windungssinn der schraubenlinienförmig verlaufenden Schweißnähte und ein Windungssinn der schraubenlinienförmig verlaufenden Statornuten gleich ausgerichtet ist oder
b) ein Windungssinn der schraubenlinienförmig verlaufenden Schweißnähte und ein Windungssinn der schraubenlinienförmig verlaufenden Statornuten entgegengesetzt ausgerichtet ist.
Im Fall a) ist das in den unterschiedlichen Schnittebenen auftretende Muster, welches eine Abweichung der zentralen Bohrung des Statorblechpakets von der Zylinderform repräsentiert, bis auf eine Verdrehung weitgehend identisch. Im Fall b) kann eine unerwünschte Verstärkung der Abweichung der zentralen Bohrung des Statorblechpakets von der Zylinderform, welche durch eine Korrelation der Schweißnähte mit den Statornuten herrührt, besonders wirksam vermieden werden.

Günstig ist es auch, wenn der Windungssinn aller schraubenlinienförmig verlaufenden Schweißnähte gleich ausgerichtet ist. Dadurch ist die Herstellung der Verschweißung des Statorblechpakets besonders einfach.

Günstig ist es zudem, wenn die Anzahl n der Schweißnähte oder Schweißnaht-Abschnitte gerade ist und eine Hälfte n/2 der Schweißnähte einen ersten Windungssinn aufweist und die andere Hälfte n/2 der Schweißnähte einen entgegengesetzten zweiten Windungssinn aufweist. Mit Hilfe dieser Maßnahmen kann ebenfalls ein hoher Grad von Symmetrie des Schweißverzugs erzielt werden. Die Schweißnähte oder Schweißnaht-Abschnitte können in diesem Fall wiederum insbesondere pfeilförmig oder zickzackförmig verlaufen.

Die obigen Ausgestaltungen und Weiterbildungen der Erfindung lassen sich auf beliebige Art und Weise kombinieren.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine;
- Fig. 2: ein mit geraden Schweißnähten verschweißtes Statorblechpaket in Schrägansicht;
- Fig. 3: ein mit pfeilförmig oder zickzack verlaufenden Schweißnähten verschweißtes Statorblechpaket in Schrägansicht und
- Fig. 4: eine elektrische Maschine mit einem Stator der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

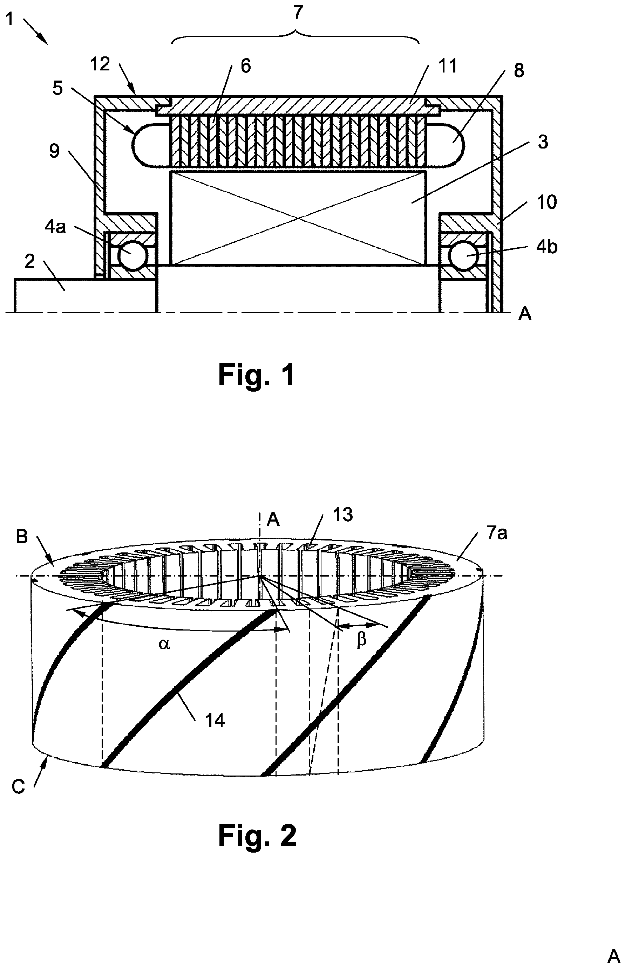

Fig. 1 zeigt einen Halbschnitt durch eine schematisch dargestellte elektrische Maschine 1. Die elektrische Maschine 1 umfasst, eine Welle 2 mit einem darauf sitzenden Rotor 3, wobei die Welle 2 mit Hilfe von (Wälz)lagern 4a, 4b um eine Drehachse A gegenüber einem Stator 5 drehbar gelagert ist. Der Stator 5 umfasst in diesem Beispiel mehrere Statorbleche 6, welche ein Statorblechpaket 7 bilden, sowie in diesem angeordnete Statorwicklungen 8. Konkret sitzt das erste Lager 4a in einem vorderen Lagerschild 9 und das zweite Lager 4b in einem hinteren Lagerschild 10. Weiterhin umfasst die elektrische Maschine 1 ein mittleres Gehäuseteil 11, welches das vordere Lagerschild 9 und das hintere Lagerschild 10 verbindet und weiterhin das Statorblechpaket 7 aufnimmt. Das vordere Lagerschild 9, das hintere Lagerschild 10 und das Gehäuseteil 11 bilden in diesem Beispiel somit das Gehäuse 12 der elektrische Maschine 1.

Fig. 2 zeigt ein beispielhaftes Statorblechpaket 7a nun in Schrägansicht, konkret ohne Statorwicklungen 8. Gut erkennbar sind daher die radial nach innen offenen Statornuten 13.

Die Statorbleche 6 sind mit einer Mehrzahl n außenliegender, über den Umfang des Statorblechpakets 7a gleich verteilter, Schweißnähte 14 miteinander verschweißt, die von einer ersten Stirnfläche B des Statorblechpakets 7a zu einer zweiten Stirnfläche C des Statorblechpakets 7a verlaufen. Die Schweißnähte 14 erstrecken sich dabei, bezogen auf die Drehachse A der elektrischen Maschine 1, jeweils über einen Winkel α. Das heißt, die Schweißnähte 14 verlaufen in nicht-axialer Richtung. Der Winkel α liegt dabei in einem Bereich von α ≥ 360°/n - 10%. Räumlich gesehen verlaufen die Schweißnähte 14 entlang einer Schraubenlinie und in einer Abwicklung eines Umfangs des Statorblechpakets 7a entlang schräg zur Drehachse A der elektrischen Maschine 1 ausgerichteten Geraden.

Die Statornuten 13 können, so wie das in der Fig. 2 der Fall ist, in axialer Richtung verlaufen, sie können von der ersten Stirnfläche B des Statorblechpakets 7 zur zweiten Stirnfläche C des Statorblechpakets 7 aber auch schraubenlinienförmig beziehungsweise in einer Abwicklung eines Umfangs des Statorblechpakets 7a entlang schräg zur Drehachse A der elektrischen Maschine 1 ausgerichteten Geraden verlaufen (siehe die strichliert gezeichnete Gerade in Fig. 2). Der Bereich, über welche sich eine solche Statornut 13 erstreckt ist in der Fig. 2 mit einem Winkel β bezeichnet. In diesem Fall entspricht der Winkel β der Teilung der Statornuten 13, dies ist aber keine notwendige Bedingung.

Von Vorteil ist es nun, wenn der Winkel α ungleich und insbesondere größer ist als der Winkel β. Auf diese Weise kann eine unerwünschte Verstärkung der Abweichung der zentralen Bohrung des Statorblechpakets 7a von der Zylinderform, welche durch eine Korrelation der Schweißnähte 14 mit den Statornuten 13 herrührt, vermieden werden. Von Vorteil ist es auch, wenn die Anzahl n der Schweißnähte ungleich und insbesondere geringer ist als eine Anzahl m der Statornuten 13, so wie das in dem in Fig. 2 dargestellten Beispiel der Fall ist. Auf diese Weise kann eine unerwünschte Verstärkung der Abweichung der zentralen Bohrung des Statorblechpakets 7a von der Zylinderform, welche durch eine Korrelation der Schweißnähte 14 mit den Statornuten 13 herrührt, ebenfalls vermieden werden.

In dem in Fig. 2 beispielhaft dargestellten Fall ist ein Windungssinn der schraubenlinienförmig verlaufenden Schweißnähte 14 und ein Windungssinn der schraubenlinienförmig verlaufenden Statornuten 13 gleich ausgerichtet. Dies ist aber nicht zwingend der Fall, sondern ein Windungssinn der schraubenlinienförmig verlaufenden Schweißnähte 14 und ein Windungssinn der schraubenlinienförmig verlaufenden Statornuten 13 könnten auch entgegengesetzt ausgerichtet sein.

In dem in Fig. 2 dargestellten Beispiel liegt eine geringfügige radiale Überlappung der Schweißnähte 14 vor (beziehungsweise eine radiale Überlappung der Umfangsbereiche, in denen die Schweißnähte 14 verlaufen), das heißt es gilt für den Winkel α > 360°/n. Denkbar wäre aber auch, dass die Schweißnähte 14 beziehungsweise die genannten Bereiche aneinander angrenzen und für den Winkel α = 360°/n gilt oder dass die Schweißnähte 14 beziehungsweise die genannten Bereiche gering voneinander beabstandet sind und für den Winkel 360°/n > α > 360°/n - 10% gilt.

Es kann auch eine deutlich stärkere Überlappung der Schweißnähte vorgesehen sein. Beispielsweise könnte eine Schweißnaht 14 an einer Winkelposition enden, an welcher eine übernächste Schweißnaht 14 beginnt. Das heißt, es könnte für den Winkel α dann α = 2 · 360°/n ± 10% gelten. Bei dreifacher Überlappung würde sogar α = 3 · 360°/n ± 10% gelten und so weiter.

Ein weiteres Merkmal der in der Fig. 2 dargestellten Anordnung ist, dass der Windungssinn aller schraubenlinienförmig verlaufenden Schweißnähte 14 gleich ausgerichtet ist. Dies ist aber ebenfalls keine zwingende Bedingung, sondern die Schweißnähte 14 könnten auch unterschiedlichen Windungssinn aufweisen. Darüber hinaus sind in der Fig. 2 alle Schweißnähte 14 in einer Abwicklung eines Umfangs des Statorblechpakets 7a parallel zueinander. Auch dies ist keine zwingende Bedingung, und die Schweißnähte 14 könnten auch entlang zueinander nicht paralleler Geraden verlaufen.

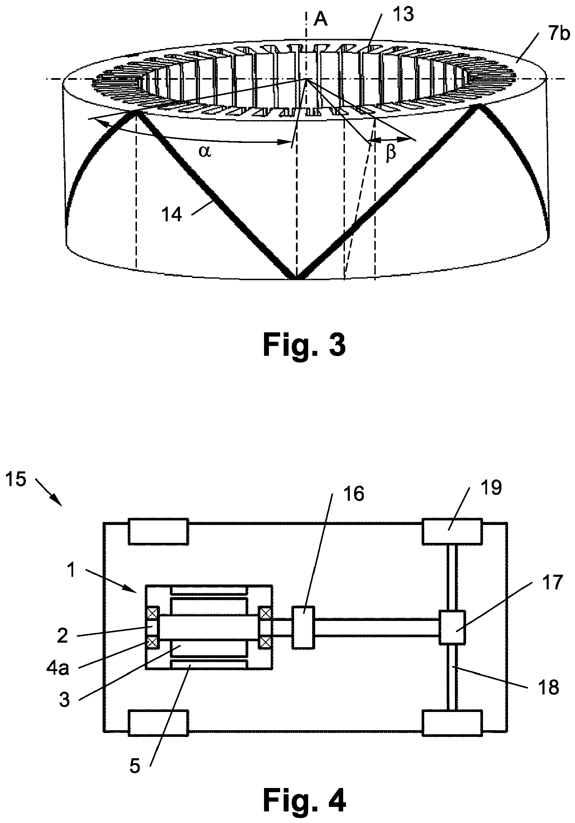

Fig. 3 zeigt dazu ein beispielhaftes Statorblechpaket 7b in Schrägansicht, das dem in Fig. 2 dargestellten Statorblechpaket 7a ähnlich ist. Im Unterschied dazu weist eine Hälfte n/2 der Schweißnähte 14 einen ersten Windungssinn auf und die andere Hälfte n/2 der Schweißnähte 14 einen entgegengesetzten zweiten Windungssinn, wobei die Anzahl n der Schweißnähte 14 gerade ist. Die Schweißnähte 14 verlaufen also pfeilförmig oder zickzack entlang von jeweils geraden beziehungsweise schraubenlinienförmigen Abschnitten. Im gezeigten Fall grenzen die Schweißnähte 14 aneinander an, weswegen für den Winkel α = 360°/n gilt. Die Schweißnähte 14 können auch als Schweißnaht-Abschnitte einer einzigen Schweißnaht 14 aufgefasst werden, wobei die Schweißnaht-Abschnitte jeweils von einer ersten Stirnfläche B des Statorblechpakets 7a zu einer zweiten Stirnfläche C des Statorblechpakets 7a oder umgekehrt dazu verlaufen. Der zickzackförmige Verlauf der Schweißnaht-Abschnitte bietet den Vorteil, dass die Schweißnaht 14 in einem Schritt beziehungsweise in einem kontinuierlichen Prozess ohne Absetzen eines Schweißwerkzeugs hergestellt werden kann. In den Ecken kann die Schweißleistung etwas reduziert werden, um kein Einbrennen zu verursachen. Beispielsweise kann die Schweißnaht 14 mit einem Laser hergestellt werden.

An dieser Stelle wird auch angemerkt, dass die pfeilförmigen beziehungsweise zickzack verlaufenden Schweißnähte 14 oder Schweißnaht-Abschnitte nicht notwendigerweise in Umfangsrichtung verlaufen, sondern auch parallel oder schräg zur Drehachse A verlaufen können. Das Pfeilmuster oder Zickzack-Muster ist dann um 90° beziehungsweise um einen anderen Winkel verdreht angeordnet. Die pfeilförmigen beziehungsweise zickzack verlaufenden Schweißnähte 14 könnten wiederum einander überlappend angeordnet sein. Insbesondere kann wiederum α = 2 · 360°/n ± 10% oder α = 3 · 360°/n ± 10% gelten.

Die Fig. 4 zeigt schließlich die in ein Fahrzeug 15 eingebaute elektrische Maschine 1. Das Fahrzeug 15 weist wenigstens zwei Achsen auf, von denen wenigstens eine angetrieben ist. Konkret ist der Elektromotor 1 mit einem optionalen Getriebe 16 und einem Differentialgetriebe 17 verbunden. An das Differentialgetriebe 17 schließen die Halbachsen 18 der Hinterachse an. An den Halbachsen 18 sind schließlich die angetriebenen Räder 19 montiert. Der Antrieb des Fahrzeugs 15 erfolgt zumindest teilweise oder zeitweise durch die elektrische Maschine 1. Das heißt, die elektrische Maschine 1 kann zum alleinigen Antrieb des Fahrzeugs 15 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Statorblechpaket (7, 7a, 7b) für einen Stator (5) einer elektrischen Maschine (1), umfassend mehrere aneinandergereihte Statorbleche (6) mit nach innen hin offenen Statornuten (13) für die Aufnahme einer Statorwicklung (8), wobei die Statorbleche (6) mit einer Mehrzahl n außenliegender, über den Umfang des Statorblechpakets (7, 7a, 7b) gleich verteilter, Schweißnähte (14) oder Schweißnaht-Abschnitte miteinander verschweißt sind, die jeweils von einer ersten Stirnfläche (B) des Statorblechpakets (7) zu einer zweiten Stirnfläche (C) des Statorblechpakets (7) verlaufen und sich, bezogen auf die Drehachse (A) der elektrischen Maschine (1), jeweils über einen Winkel (α) erstrecken, der in einem Bereich von α ≥ 360°/n - 10% liegt.

2. Statorblechpaket (7, 7a, 7b) nach Anspruch 1, **dadurch gekennzeichnet, dass** die Anzahl n der Schweißnähte (14) oder Schweißnaht-Abschnitte ungleich und insbesondere geringer ist als eine Anzahl m der Statornuten (13).

3. Statorblechpaket (7, 7a, 7b) nach Anspruch 1 oder 2, **dadurch gekennzeichnet, dass** der Winkel (α) ungleich und insbesondere größer ist als ein Winkel (β), über welche sich eine von der ersten Stirnfläche (B) des Statorblechpakets (7) zu der zweiten Stirnfläche (C) des Statorblechpakets (7) schraubenlinienförmig verlaufende Statornut (13) erstreckt.

4. Statorblechpaket (7, 7a, 7b) nach einem der Ansprüche 1 bis 3, **dadurch gekennzeichnet, dass** die Schweißnähte (14) oder Schweißnaht-Abschnitte in einer Abwicklung einer Umfangs des Statorblechpakets (7, 7a, 7b) jeweils entlang einer schräg zur Drehachse (A) der elektrischen Maschine (1) ausgerichteten Gerade verlaufen oder pfeilförmig oder zickzack verlaufen.

5. Statorblechpaket (7, 7a, 7b) nach einem der Ansprüche 1 bis 4, **dadurch gekennzeichnet, dass** die Statornuten (13) jeweils schraubenlinienförmig verlaufen und
a) ein Windungssinn der schraubenlinienförmig verlaufenden Schweißnähte (14) und ein Windungssinn der schraubenlinienförmig verlaufenden Statornuten (13) gleich ausgerichtet ist oder
b) ein Windungssinn der schraubenlinienförmig verlaufenden Schweißnähte (14) und ein Windungssinn der schraubenlinienförmig verlaufenden Statornuten (13) entgegengesetzt ausgerichtet ist.

6. Statorblechpaket (7, 7a, 7b) nach einem der Ansprüche 1 bis 5, **dadurch gekennzeichnet, dass** die Statornuten (13) jeweils schraubenlinienförmig verlaufen und der Windungssinn aller schraubenlinienförmig verlaufenden Schweißnähte (14) gleich ausgerichtet ist.

7. Statorblechpaket (7, 7a, 7b) nach einem der Ansprüche 1 bis 5, **dadurch gekennzeichnet, dass** die Anzahl n der Schweißnähte (14) oder Schweißnaht-Abschnitte gerade ist und eine Hälfte n/2 der Schweißnähte (14) einen ersten Windungssinn aufweist und die andere Hälfte n/2 der Schweißnähte (14) einen entgegengesetzten zweiten Windungssinn aufweist.

8. Statorblechpaket (7, 7a, 7b) nach einem der Ansprüche 1 bis 7, **dadurch gekennzeichnet, dass** die Schweißnähte (14) oder Schweißnaht-Abschnitte
i) aneinander angrenzen und für den Winkel α = 360°/n gilt oder
ii) einander überlappen und für den Winkel α > 360°/n gilt oder
iii) gering voneinander beabstandet sind und für den Winkel 360°/n > α > 360°/n - 10% gilt.

9. Elektrische Maschine (1) mit einem Stator (5) umfassend ein Statorblechpaket (7, 7a, 7b) mit mehreren Statorblechen (6) mit nach innen hin offenen Statornuten (13), in denen eine Statorwicklung (8) aufgenommen ist, und einen gegenüber dem Stator (5) um die Rotationsachse (A) des Rotors (3) drehbar gelagerten Rotor (3),
**dadurch gekennzeichnet, dass**
das Statorblechpaket (7, 7a, 7b) nach einem der Ansprüche 1 bis 8 ausgebildet ist.

10. Fahrzeug (15) mit wenigstens zwei Achsen, von denen wenigstens eine angetrieben ist, **dadurch gekennzeichnet dass** der besagte Antrieb zumindest teilweise oder zeitweise durch die elektrische Maschine (1) nach Anspruch 9 erfolgt.
